# DEMANDE DE BREVET EUROPEEN

(11) **EP 3 144 189 A1**
(43) Date de publication de la demande: **22.03.2017**
(21) Numéro de dépôt: 16187945.7
(22) Date de dépôt: 09.09.2016
(51) Int. Cl.: B60S 1/48

(54) **ADAPTATEUR DE CONDUITE DE LIQUIDE ET DISPOSITIF DE DISTRIBUTION DE LIQUIDE DE BALAIS D'ESSUIE-GLACE DE VÉHICULE AUTOMOBILE**

(30) Priorité: 16.09.2015 FR 1558671
(71) Demandeur: Valeo Systèmes d'Essuyage, 78322 Le Mesnil Saint Denis (FR)
(72) Inventeur: CAILLOT, Gérald, 78720 CERNAY LA VILLE (FR)
(74) Mandataire: Vincent, Catherine Marie Marguerite

(57) **Abrégé**

Adaptateur (1) de conduite de liquide pour dispositif de distribution de liquide (100) de véhicule automobile, l'adaptateur (1) comportant :
- au moins une canule (2) conformée pour s'insérer dans un canal d'une conduite de liquide (101),
- un logement (15) présentant au moins un raccord apte à raccorder la canule (2, 2a, 2b) à une portion tubulaire male (31a, 31b, 32a, 32b) d'un élément de raccord à liquide (3, 3a, 3b),
caractérisé en ce que l'adaptateur de conduite de liquide comporte un moyen de chauffage destiné à chauffer au moins une partie dudit adaptateur (1).

## Description

La présente invention concerne un adaptateur de conduite de liquide pour un dispositif de distribution de liquide de lavage, en particulier pour balais d'essuie-glace, de véhicule automobile dans lequel le liquide de lavage est réchauffé/dégivré. La présente invention concerne également un dispositif de distribution muni d'un tel adaptateur.

Les véhicules automobiles sont couramment équipés de système d'essuyage du pare-brise servant à assurer au conducteur une vision dégagée de son environnement, en particulier en cas d'intempéries. Un tel système comprend généralement un ou deux balais d'essuie-glace qui raclent la surface extérieure du pare-brise de manière à évacuer en dehors du champ de vision du conducteur l'eau et/ou la neige présente sur cette surface.

Il est également connu d'équiper les véhicules d'un système de lavage agencé pour projeter un liquide de lavage sur le pare-brise, de manière à faciliter la dissolution des salissures, et ainsi augmenter la qualité du nettoyage de ce pare-brise en particulier sous l'action du système d'essuyage. Dans une version de système de lavage, celui-ci comporte des gicleurs situées sur le véhicule. Dans une autre version il a été proposé un balai d'essuie-glace qui comporte son propre élément de projection de liquide de lavage. Autrement dit, la projection du liquide de lavage a lieu depuis le balai d'essuie-glace lui-même, à partir de buse d'aspersion ou gicleurs réparties le long dudit balai.

Les gicleurs du système de lavage, en particulier des balais d'essuie-glace sont alimentés en liquide de lavage contenu dans un réservoir par l'intermédiaire d'une pompe. Pour cela, une conduite de liquide principale, agencée sous le capot du véhicule transporte le liquide de lavage prélevé dans le réservoir par la pompe vers un dispositif de distribution comportant un ou deux clapets anti-retour. Ce dispositif distribue à son tour le liquide de lavage dans deux conduites de liquide secondaires notamment vers des balais d'essuie-glace. Afin de raccorder les conduites de liquide secondaires au dispositif de distribution, il est couramment utilisé une pièce intermédiaire, dite adaptateur, afin de faciliter la connexion/déconnexion des conduites de liquide secondaires au dispositif de distribution.

Lorsque les températures sont froides voire négatives, il est connu de réchauffer les conduites de liquide de lavage, chaque conduite comportant un manchon extrudé de canaux de circulation et dans lequel des conducteurs électriques chauffants sont noyés dans la masse. Par exemple, lorsque la température du liquide de lavage est trop basse, par exemple en-dessous de 5°C, on réchauffe/dégèle le liquide de lavage. Pour cela, les conduites de transport principales et secondaires réchauffent le liquide de lavage prélevé dans le réservoir par la pompe vers le(s) gicleur(s) par exemple au moment ou l'on actionne la commande de lavage du pare-brise, généralement par le levier de commande placé à côté du volant et contrôlant entre autre l'actionnement des balais d'essuie-glaces. Ainsi le liquide lave-glace est réchauffé et acheminé dans la conduite jusqu'au(x) gicleur(s) sans obstacle dans le canal de circulation du liquide de lavage.

Cependant, il convient de remarquer que, malgré le réchauffage au niveau des conduites, dans certains cas, le liquide de lavage contenu dans l'adaptateur, voire le dispositif de distribution peut geler. Le gel du liquide de lavage dans l'adaptateur a pour conséquences néfastes, d'une part, de bloquer la fonction de projection des gicleurs ou du balai d'essuyage, et, d'autre part, de contribuer à rigidifier l'ensemble de la structure de l'adaptateur, voir même de briser certains éléments constituants l'adaptateur mais aussi le dispositif de distribution attenant à l'adaptateur.

Un des buts de la présente invention est de proposer un adaptateur de conduite de liquide de lavage et un dispositif de distribution de liquide de lavage comportant un moyen de chauffage destiné à réchauffer l'adaptateur et par conséquent une partie du dispositif.

A cet effet, la présente invention a pour objet un adaptateur de conduite de liquide pour dispositif de distribution de liquide de véhicule automobile, l'adaptateur comportant au moins une canule conformée pour s'insérer dans un canal d'une conduite de liquide, un logement présentant au moins un raccord apte à raccorder la canule à une portion tubulaire mâle d'un élément de raccord à liquide,
la canule débouchant dans le logement, de manière à permettre le passage du fluide entre la canule et le logement,
caractérisé en ce que l'adaptateur de conduite de liquide comporte un moyen de chauffage destiné à chauffer au moins une partie dudit adaptateur.

Grâce à ce moyen de chauffage situé dans l'adaptateur de conduite de liquide et à proximité du dispositif de distribution de liquide, le liquide présent dans l'adaptateur ainsi que dans le dispositif de distribution ne gèlera pas. En effet, apporter de la chaleur de manière continue dans une zone particulièrement sensible au gel permet d'assurer un fonctionnement optimal de la fonction arrosage des balais et ceci par des températures négatives.
Par liquide de lavage on entend dans le cadre de la présente invention tout liquide de type lave glace adapté au nettoyage d'une surface vitrée de véhicule, en particulier le nettoyage associé à l'utilisation de balai d'essuie-glace.

Selon une ou plusieurs caractéristiques de l'adaptateur, prise seule ou en combinaison :
- la canule et le logement de l'adaptateur de conduite de liquide sont réalisés en une seule pièce, notamment en matière plastique.
- la canule présente une section interne de forme tubulaire.
- la canule comporte un moyen de maintien pour maintenir le canal de la conduite de liquide inséré sur ladite canule.
   le moyen de maintien de la canule est, au moins en partie, réalisé par au moins une nervure radiale agencée en périphérie extérieure de la canule .
- le moyen de maintien de la canule est, au moins en partie, réalisé par une canule de forme tronconique.
- la canule est, au moins en partie formé par une portion annulaire d'extrémité amincie consécutive à une portion annulaire en crochet ménagé dans l'épaisseur de la canule.
- le moyen de maintien de la canule dans le canal comporte un élément de cerclage extérieur solidaire de la canule, pour guider et maintenir la canule dans le canal de la conduite de liquide.
- le raccord est configuré pour raccorder le logement à la portion tubulaire mâle d'un élément de raccord à liquide par encliquetage.
- le logement est une cavité ouverte.
- l'adaptateur de conduite de liquide comprend une paroi située entre la canule et le logement.
- la canule s'étend selon un axe longitudinal perpendiculaire à la paroi séparant la canule et le logement.
- la paroi délimite le fond de la cavité du logement.
- la paroi est de forme sensiblement oblongue.
- l'adaptateur comporte au moins un joint annulaire disposé au fond de la cavité du logement, de préférence en contact avec la paroi.
- le joint annulaire est interposé entre la portion tubulaire mâle de l'élément de raccord à liquide et le logement, en position assemblée.
- la canule débouche dans le logement, de manière à permettre le passage du liquide de lavage entre la canule et le logement.
- l'adaptateur comporte un moyen de passage pour le moyen de chauffage.
- le moyen de passage est formé par au moins un orifice dans la paroi.
- le moyen de chauffage est constitué d'au moins un fil chauffant, et de préférence de deux fils chauffants.
- le fil chauffant traverse la cavité du logement.
- le fil chauffant est disposé à proximité de la canule.
- le fil chauffant est connecté à un connecteur électrique.
- L'adaptateur comporte deux canules d'entrée conformées pour s'insérer dans un canal respectif d'une conduite de liquide ayant deux canaux.
- le fil chauffant est disposé entre lesdites canules d'entrée.
- l'adaptateur comporte deux moyens de maintien pour maintenir les canules d'entrée dans leur canal respectif.
- le logement présente deux raccords pour raccorder les canules d'entrée à respectivement deux portions tubulaires mâles de deux éléments de raccord à liquide.

L'invention a aussi pour objet un dispositif de distribution de liquide de lavage de véhicule automobile, notamment pour balais d'essuie-glace, comportant au moins une conduite de liquide présentant au moins un canal, le dispositif de distribution comporte un adaptateur selon l'invention pour raccorder au moins une portion tubulaire mâle d'un élément de raccord de liquide à une conduite de liquide.

Le dispositif de distribution de liquide de lavage est par exemple constitué d'une conduite de liquide et d'un adaptateur selon l'invention pour raccorder au moins une portion tubulaire mâle d'un élément de raccord de liquide à la conduite de liquide.

Selon une ou plusieurs caractéristiques du dispositif de distribution de liquide de lavage, prise seule ou en combinaison :
- le au moins un canal est formé par un manchon extrudé.
- le dispositif de distribution de liquide comporte un élément de raccord à liquide comprenant deux portions tubulaires mâles présentant des axes sensiblement parallèles, chaque portion tubulaire mâle présentant une nervure radiale en crochet ménagée en périphérie extérieure, lesdites nervures radiales en crochet étant axialement décalées l'une de l'autre.

D'autres avantages et particularités de l'invention ressortent de la description de modes de réalisation faite ci-après en référence aux dessins annexés dans lesquels :
- la figure 1 représente une vue schématique d'éléments d'un dispositif de distribution de liquide de lavage de véhicule automobile,
- la figure 2 représente une vue schématique d'un adaptateur de conduite de liquide pour dispositif de distribution de liquide de lavage de véhicule automobile,
- la figure 3 représente une vue en coupe longitudinale de l'adaptateur de la figure 2,
- la figure 4 représente une vue schématique partielle en coupe d'une canule d'un adaptateur selon une variante de réalisation,
- la figure 5 représente une vue schématique partielle en coupe d'une canule d'un adaptateur selon une autre variante de réalisation,
- la figure 6 représente une vue en perspective d'un adaptateur selon une première variante de réalisation, vu depuis le coté destiné à être raccordé à une conduite de liquide,
- la figure 7 représente une vue schématique de deux éléments de raccord assemblés l'un sur l'autre, et
- la figure 8 représente une vue de l'adaptateur de la figure 2, vu du coté destiné à être raccordé à deux éléments de raccord.

Sur ces figures, les éléments identiques portent les mêmes numéros de référence.

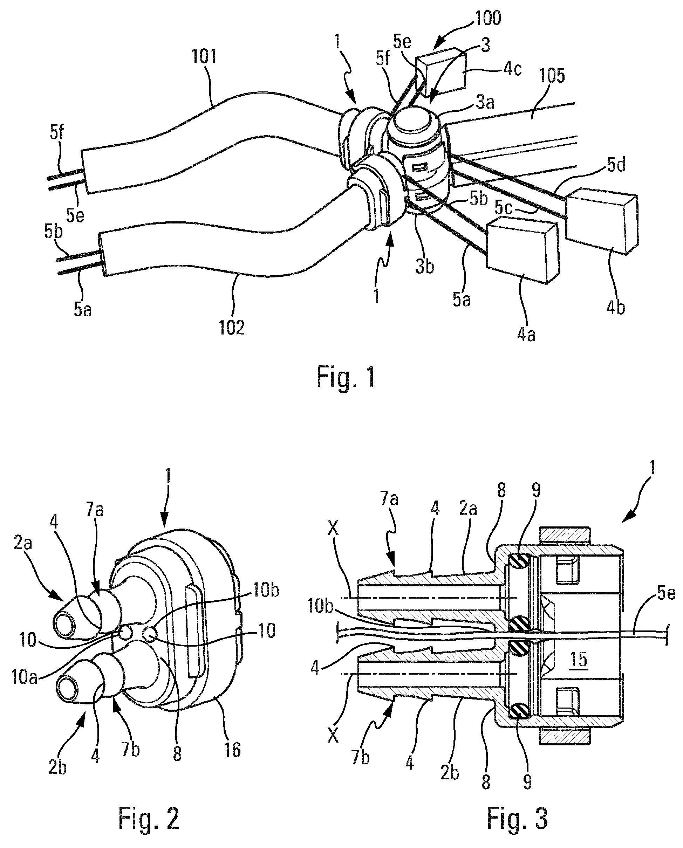

Sur la figure 1 est représenté un dispositif 100 de distribution de liquide de lavage qui comporte une conduite principale de liquide 105 agencée sous le capot du véhicule automobile, deux conduites secondaires de liquide 101, 102, deux éléments de raccord à liquide 3, qui sont comme illustré des clapets anti-retour 3a, 3b, ou dans un variante non illustrée des raccords en Y simples sans clapet anti retour intégré, deux adaptateurs de conduite de liquide 1 et deux connecteurs électriques 4a, 4b destinés à alimenter électriquement des fils chauffants 5a, 5b, 5c, 5d, 5e, 5f reliés auxdits connecteurs électriques 4a, 4b et 4c.

La conduite principale de liquide 105 sous-capot est raccordée hydrauliquement d'une part à un réservoir et d'autre part, aux clapets anti-retour 3a, 3b. Les deux conduites de liquide secondaires 101, 102 sont raccordées hydrauliquement d'une part aux clapets anti-retour 3a, 3b et d'autre part aux gicleurs de projection de liquide de lavage. Les gicleurs (non représentés) sont par exemple situés sur rampes d'arrosage respectives des balais d'essuie-glace conducteur et passager, ou sur un support fixé sur la structure du véhicule à proximité de la surface à nettoyer.

Les clapets anti-retour 3a, 3b permettent le passage du liquide pompé dans le sens de circulation allant de la pompe vers les gicleurs et le blocage du retour du flux de liquide pompé dans l'autre sens, c'est-à-dire des gicleurs vers la pompe. Les clapets anti-retour 3a, 3b évitent ainsi toute remontée de liquide de lavage vers la pompe, notamment en phase d'arrêt de distribution de liquide dans un canal de circulation.

En particulier, les clapets anti-retour 3a, 3b permettent le passage du liquide pompé dans le sens de circulation allant de la pompe vers la rampe d'arrosage du balai et le blocage du retour du flux de liquide pompé de la rampe d'arrosage du balai vers la pompe. Les clapets anti-retour 3a, 3b évitent ainsi toute remontée de liquide des balais d'essuie-glace vers la pompe.

La conduite principale 105 comporte un manchon extrudé de deux canaux de circulation superposés et comporte deux fils chauffants 5c, 5d noyés dans la masse du manchon. La conduite principale 105 est en matériau souple, par exemple en caoutchouc. Les canaux de circulation du liquide lave-glace dans lesquels sont situés les fils chauffants 5c, 5d sont en particulier obtenus par extrusion : les fils chauffants 5c, 5d sont par exemple introduits avec la matière lors de l'opération d'extrusion. Dans une variante les canaux de circulation sont extrudés avec deux trous agencés pour recevoir ultérieurement les fils chauffants.

Les conduites secondaires de balai d'essuie-glace 101, 102 sont similaires à la conduite principale sous-capot 105. Elles comportent chacune un manchon extrudé de deux canaux de circulation superposés et deux fils chauffants noyés dans la masse du manchon. Chaque fil chauffant est relié à un connecteur électrique 4a, 4b, 4c.

Ainsi, comme visible sur la figure 1, le connecteur 4b alimente électriquement les fils chauffants 5c et 5d afin de réchauffer la conduite principale de liquide 105. Le connecteur électrique 4a alimente électriquement les fils chauffants 5a et 5b afin de réchauffer la conduite secondaire de liquide 102. De la même manière, un autre connecteur électrique (non représenté) alimente électriquement les fils chauffants 5e et 5f afin de réchauffer la conduite secondaire de liquide 101.

Les fils chauffants 5a, 5b, 5e, 5f se trouvant du coté des deux conduites secondaires de liquide 101 et 102 traversent également chaque adaptateur 1 de conduit de liquide par l'intermédiaire de moyens de passages, sous forme de trous, situés sur ces adaptateurs.

Ainsi, les fils chauffants 5a, 5b, 5e, 5f réchauffent les conduits 101, 102 sur toute leur longueur mais réchauffent également les adaptateurs 1, ce qui évite que les adaptateurs 1 ne gèlent.

Sur la figure 2 est représente un adaptateur 1 pour raccorder respectivement des portions tubulaires mâles d'un des clapets anti-retour 3a, 3b à une conduite secondaire de liquide 101, 102 respective. Les deux adaptateurs 1 sont identiques.

Chaque adaptateur 1 comporte :
- deux canules d'entrée 2a, 2b conformées pour s'insérer dans un canal respectif de la conduite de liquide secondaire,
- deux moyens de maintien 7a, 7b pour maintenir chaque canule d'entrée2a, 2b dans son canal respectif, et
- deux moyens de passage 10a, 10b sous formes de trous 10 destinés au passage des fils chauffants 5a, 5b, respectivement 5e, 5f afin de réchauffer l'adaptateur,
- un clip 16 présentant une forme générale d'agrafe s'emboitant autour des parois extérieur de l'adaptateur, servant de moyen de verrouillage de l'adaptateur sur le dispositif de distribution de liquide.

Comme visibles sur la figure 2, les moyens de passage 10a et 10b sont sous forme de trous 10 situés au niveau de la paroi 8 de l'adaptateur 1, plus précisément entre les deux canules d'entrée 2a et 2b afin d'être situés au plus près des zones ou passe le liquide de lavage. Ces moyens de passage 10a et 10b permettent de laisser passer les fils chauffants 5e, 5f débouchant de l'extrémité de la conduite secondaire de liquide en regard de l'adaptateur 1.

Mieux visible sur la figure en coupe 3, du côté du raccordement à la conduite de liquide secondaire, le moyen de maintien 7a, 7b des canules d'entrée 2a, 2b comporte deux nervures radiales 4 de forme générale tronconique. Les nervures radiales sont agencées en périphérie extérieure de chaque canule 2a, 2b, de manière à maintenir la canule 2a, 2b dans le canal respectif de la conduite secondaire de liquide par déformation et d'assurer l'étanchéité.

Les canules d'entrée 2a, 2b présentent une section interne de forme tubulaire. Les axes x canules d'entrée 2a, 2b sont sensiblement parallèles entre eux avec un espacement correspondant à l'espacement des canaux des conduites secondaire de liquide. Les canules d'entrée 2a, 2b sont situées l'une au dessus de l'autre, de manière superposée.

L'adaptateur 1 présente également un logement 15 présentant deux raccords pour raccorder respectivement deux portions tubulaires mâles de deux clapets anti-retour 3a, 3b. Ce logement 15 est une cavité ouverte en direction des deux portions des tubulaires mâles 11, 13 de deux clapets anti-retour 3a, 3b.

Les deux canules d'entrée 2a, 2b et le logement 15 sont réalisé en une seule pièce, en matière plastique. Pour cela, entre les canules d'entrée 2a, 2b et le logement 15 se trouve une paroi 8. Cette paroi 8 sert de lien entre les canules d'entrée 2a, 2b et le logement 15. Une fois que les conduites de liquide secondaires 101, 102 sont en position sur les canules d'entrée 2a, 2b, les fils chauffants 5a, 5b et 5e, 5f dépassant des conduites secondaires de liquide 101, 102 traversent la paroi 8 de l'adaptateur correspondant via des moyens de passage 10a, 10b afin de venir réchauffer le logement 15. La paroi 8 est dans l'exemple illustré située perpendiculairement à l'axe X des canules d'entrées 2a, 2b.

Les moyens de passage 10a, 10b des fils chauffants sont réalisés sous forme de trous de passage situés entre les deux canules d'entrées 2a, 2b de l'adaptateur 1. Les fils chauffants traversent alors le logement 15 pour aller relier le connecteur électrique associé aux fils chauffants.

L'adaptateur 1 comporte deux joints annulaires 9, chacun disposé dans une gorge ménagée dans le logement 15. Les joints annulaires 9 sont agencés pour coopérer par encliquetage avec une nervure annulaire tronconique de la portion tubulaire mâle 31 a, 31 b, 32a, 32b des clapets anti-retour 3a, 3b. De manière alternative, les joints annulaires sont portés par une portion tubulaire mâle des clapets anti-retour 3a, 3b.

Les deux joints annulaires 9 sont en contact direct avec la paroi 8 en position assemblée.

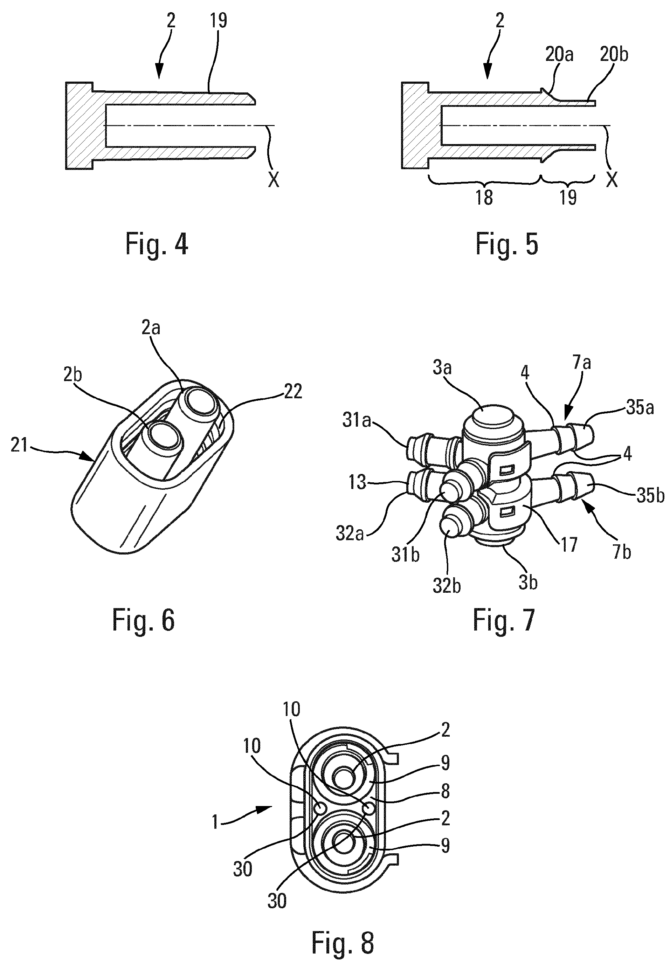

Selon une deuxième variante de réalisation du moyen de maintien représentée sur la figure 4, la section interne de la canule 2a, 2b présente une forme tubulaire de diamètre constant tandis que la partie 19 présente une section externe de forme tronconique. La section la plus étroite de la forme tronconique est située du côté de l'extrémité libre, ce qui permet de faciliter l'enfoncement de la conduite de liquide secondaire sur les canules 2.

Selon une troisième variante de réalisation représentée en figure 5, le moyen de maintien de la canule est formé une portion annulaire d'extrémité amincie 20b, consécutive à une portion annulaire en crochet 20a, ménagées dans l'épaisseur de la canule pour retenir la canule dans le canal de la conduite secondaire de liquide 101, 102, par accrochage. La canule 2 présente une partie 18 de section externe de forme tubulaire de diamètre constant.

Selon une quatrième variante de réalisation représentée en figure 6, le moyen de maintien des canules d'entrée comporte en outre un élément de cerclage extérieur 21 solidaire des canules d'entrée 2a, 2b pour guider l'assemblage et maintenir la canule dans le canal de la conduite secondaire de liquide 102. L'élément de cerclage extérieur peut de plus présenter des reliefs, périphériques 22 internes de maintien, notamment des reliefs annulaires comme illustrés.

Sur la figure 7 sont représentés les clapets anti-retour 3a et 3b comportant chacun une portion tubulaire d'entrée 35a et 35b et deux portions tubulaires mâles de sortie 31 a, 32a, respectivement 31 b et 32b par exemple agencées en Y. Les clapets anti-retour présentent une forme générale cylindrique et sont réalisés par exemple en matériau plastique. Les clapets anti-retour sont agencés l'un au dessus de l'autre par exemple logés dans un support 17, par exemple de manière à ce que les portions tubulaires mâles soient sensiblement parallèles entre elles.

## Revendications

1. Adaptateur (1) de conduite de liquide pour dispositif de distribution (100) de liquide de lavage de véhicule automobile, l'adaptateur (1) comportant :
- au moins une canule (2) conformée pour s'insérer dans un canal d'une conduite de liquide (101),
- un logement (15) présentant au moins un raccord apte à raccorder la canule (2, 2a, 2b) à une portion tubulaire male (31 a, 31 b, 32a, 32b) d'un élément de raccord à liquide (3, 3a, 3b),
**caractérisé en ce que** l'adaptateur de conduite de liquide comporte un moyen de chauffage destiné à chauffer au moins une partie dudit adaptateur (1).

2. Adaptateur (1) de conduite de liquide selon la revendication précédente **caractérisé en ce que** la canule (2, 2a, 2b) et le logement (15) sont réalisés en une seule pièce, notamment en matière plastique.

3. Adaptateur (1) de conduite de liquide selon la revendication précédente **caractérisé en ce que** la canule (2, 2a, 2b) présente une section interne de forme tubulaire.

4. Adaptateur (1) de conduite de liquide selon la revendication précédente **caractérisé en ce que** la canule (2, 2a, 2b) comporte un moyen de maintien (7a, 7b) pour maintenir le canal de la conduite de liquide (101) inséré sur ladite canule,
ledit moyen de maintien de la canule (2, 2a, 2b) est réalisé au moins en partie par au moins un parmi
- une nervure radiale (4) agencée en périphérie extérieure de la canule,
- une partie (19) de forme tronconique,
- une portion annulaire d'extrémité amincie (20b), consécutive à une portion annulaire en crochet (20a) ménagée dans l'épaisseur de la canule (2),
- un élément de cerclage extérieur (21) solidaire de la canule (2, 2a, 2b), agencé pour guider et maintenir la canule dans le canal de la conduite de liquide (101, 102).

5. Adaptateur (1) de conduite de liquide selon l'une quelconque des revendications précédentes **caractérisé en ce que** le raccord est configuré pour raccorder le logement (15) à la portion tubulaire mâle (31 a, 31 b, 32a, 32b) d'un élément de raccord à liquide (3, 3a, 3b) par encliquetage.

6. Adaptateur (1) de conduite de liquide selon la revendication précédente **caractérisé en ce que** le logement (15) est une cavité ouverte.

7. Adaptateur (1) de conduite de liquide selon l'une quelconque des revendications précédentes **caractérisé en ce qu'**il comprend une paroi (8) située entre la canule (2) et le logement (15), délimitant notamment le fond du logement (15), la paroi (8) étant notamment de forme sensiblement oblongue.

8. Adaptateur (1) de conduite de liquide selon la revendication précédente **caractérisé en ce que** l'adaptateur (1) comporte au moins un joint annulaire (9) disposé au fond de la cavité du logement (15), de préférence en contact avec la paroi (8).

9. Adaptateur (1) de conduite de liquide selon la revendication précédente **caractérisé en ce que** le joint annulaire (9) est interposé entre la portion tubulaire mâle (31 a, 31 b, 32a, 32b) de l'élément de raccord à liquide (3) et le logement (15), en position assemblée.

10. Adaptateur (1) de conduite de liquide selon l'une quelconque des revendications précédentes **caractérisé en ce que** l'adaptateur (1) comporte un moyen de passage (10a, 10b) pour le moyen de chauffage (30),
formé notamment par au moins un orifice (10) dans la paroi (8).

11. Adaptateur (1) de conduite de liquide selon l'une quelconque des revendications précédentes **caractérisé en ce que** le moyen de chauffage est constitué d'au moins un fil chauffant (5a, 5b, 5c, 5d, 5e, 5f), et de préférence de deux fils chauffants.

12. Adaptateur (1) de conduite de liquide selon la revendication précédente **caractérisé en ce que** le fil chauffant (5a, 5b, 5c, 5d, 5e, 5f) traverse la cavité du logement (15).

13. Adaptateur (1) de conduite de liquide selon l'une quelconque des revendications précédentes **caractérisé en ce que** cet adaptateur (1) comporte deux canules (2) conformées pour s'insérer dans un canal respectif d'une conduite de liquide (101, 102) ayant deux canaux.

14. Adaptateur (1) de conduite de liquide selon les revendications 11 et 13 **caractérisé en ce que** le fil chauffant (5a, 5b, 5c, 5d, 5e, 5f) est disposé entre lesdites canules (2).

15. Dispositif de distribution de liquide (100) de véhicule automobile comportant au moins une conduite de liquide (101, 102) présentant au moins un canal **caractérisé en ce qu'**il comporte un adaptateur (1) selon l'une des revendications précédentes pour raccorder au moins une portion tubulaire mâle (31 a, 31 b, 32a, 32b) d'un élément de raccord (3, 3a, 3b) de liquide à une conduite de liquide (101, 102).

16. Dispositif de distribution de liquide (100) selon la revendication précédente **caractérisé en ce que** le canal est un manchon extrudé.

17. Dispositif de distribution de liquide (100) selon la revendication précédente **caractérisé en ce que** le fil chauffant (5a, 5b, 5c, 5d, 5e,) est situé dans le manchon extrudé.

18. Dispositif de distribution de liquide (100) selon la revendication précédente comportant un adaptateur selon l'une quelconque des revendications 1 à 14, **caractérisé en ce qu'**il comporte un élément de raccord à liquide (3, 3a, 3b) comprenant deux portions tubulaires mâles (31 a, 31 b, 32a, 32b,) présentant des axes sensiblement parallèles, chaque portion tubulaire mâle (31 a, 31 b, 32a, 32b) présentant une nervure radiale en crochet ménagée en périphérie extérieure, lesdites nervures radiales en crochet étant axialement décalées l'une de l'autre.
